# EUROPEAN PATENT APPLICATION

(11) **EP 4 726 396 A1**
(43) Date of publication of application: **15.04.2026**
(21) Application number: 24819064.7
(22) Date of filing: 02.05.2024
(51) Int. Cl.: G01N 35/00, G01N 35/10

(54) **AUTOMATED ANALYZING DEVICE AND ABNORMALITY DETERMINING METHOD FOR SAME**

(30) Priority: 09.06.2023 JP 2023095708
(71) Applicant: HITACHI HIGH-TECH CORPORATION, Tokyo 105-6409 (JP)
(72) Inventor: MOHRI, Kyohsuke, Tokyo 105-6409 (JP); TAKAKURA, Tatsuki, Tokyo 105-6409 (JP)
(74) Representative: Strehl & Partner mbB
(86) International application number: PCT/JP2024/016844
(87) International publication number: WO 2024/252827

(57) **Abstract**

In an automatic analyzers that cause reaction of an analytical reagent with a biological sample such as blood or the like and with a component to be measured in the sample, and use optical methodology to detect the reaction, the automatic analyzer is provided that is capable of sensing abnormality occurred during a liquid dispensing action with ease and with high precision.

An automatic analyzer and a method of determining abnormality in the automatic analyzer which includes: a probe for performing a dispensing action including a process of aspirating and/or discharging liquid; a syringe for generating pressure variations for allowing the probe to dispense liquid; a flow passage connecting the probe and the syringe; a sensor for measuring a pressure in the flow passage during liquid dispense; a calculator for calculating an attenuation rate of a time-varying waveform of pressure measured by the sensor after a predetermined action of the syringe; and a determination unit making, based on an attenuation rate calculated by the calculator, a determination whether or not an abnormality has occurred in a process during liquid dispense.

## Description

### Technical Field

The present invention relates to an automatic analyzer for qualitative/quantitative analysis of a component in a biological sample such as blood and urine, and specifically, relates to the automatic analyzer capable of more accurately sensing a dispense abnormality such as idle aspiration caused by unintentionally aspirating air during aspiration of the sample.

### Background Art

The automatic analyzer is an apparatus to cause reaction of an analytical reagent with the biological sample such as blood and the like, and with a component to be measured in the sample utilizing optical methodology to detect the reaction. It is configured to automatically perform a series of operations from detection of the component to be measured to output of the result.

The automatic analyzer is one of essential apparatuses that attain efficient analysis for inspection centers and other medical research facilities, which undertake inspections/tests of samples for hospital and clinic.

A generally employed automatic analyzer is equipped with a sample dispensing mechanism for dispensing a sample to be measured. The sample dispensing mechanism includes a dispensing probe (it may be called a dispensing nozzle. This will be referred to as a probe), a syringe connected to the dispensing probe, and a mechanism that moves the probe to a predetermined position. The automatic analyzer performs a liquid dispensing action as described below. The syringe is driven to aspirate a predetermined volume of liquid into the probe while having a leading end of the probe inserted in the liquid. The syringe is driven to discharge the liquid in the probe at the discharging position so that the liquid is transferred from one container to another.

In order to prevent contamination caused by mixture of different types of liquids for aspiration, a disposable tip is attached to the leading end of the probe to perform the liquid dispensing action.

When aspirating the liquid in the state where the leading end of the probe is positioned above the liquid surface during handling of the liquid in the dispensing action, air and bubbles, instead of the liquid, may be unintentionally aspirated. If the predetermined volume of the liquid cannot be aspirated during the liquid aspiration under the above-described situation, accurate analytical results cannot be obtained.

If the obtained analytical result is used for diagnosis without being aware of the above-described situation, there is a concern that accurate diagnosis cannot be performed. It is essential for the clinical examination to accurately determine whether or not such abnormality has occurred.

Patent Literature 1 discloses the solution of the above-described failure by sampling pressure variations at predetermined intervals in response to the trigger as the backlash compensation to cancel the play of the gear of the motor that drives the syringe. The following describes the disclosed technique. The integrated pressure value in the specific time section is arithmetically operated. The obtained value is compared with the threshold value as the determination object value preliminarily set per dispense volume to distinguish between the normal aspiration and the aspiration upon mixture of bubbles.

### Citation List

### Patent Literature

Patent Literature 1: Japanese Unexamined Patent Application Publication No. 2009-058318

### Summary of Invention

### Technical Problem

The methodology as disclosed in Patent Literature 1 focuses on the integrated pressure value of the pressure in the dispensing flow passage during liquid discharging in the time sections. Such methodology allows excellent sensing of abnormality if a relatively large difference in the pressure waveforms is recognized in the respective integral sections. If the large difference in the pressure waveforms is not recognized in the integral sections between the normal aspiration and the abnormal aspiration owing to small dispense volume of the sample, it may be difficult to sense the abnormality.

It is assumed that adjustment for each of the integral sections is required in accordance with the dispense volume. It is thought to be likely that the increase in the number of parameters used for determination increases computational loads and prolongs the required time.

In view of the above-described problems, it is an object of the present invention to provide an automatic analyzer capable of easily sensing the abnormality occurred during a dispensing action with high accuracy.

### Solution to Problem

For the purpose of solving the above-described problem, the present invention is configured as follows.

The automatic analyzer includes a probe for performing a dispensing action including a process of aspirating and/or discharging liquid, a syringe for generating pressure variations for allowing the probe to dispense liquid, a flow passage connecting the probe and the syringe, a sensor for measuring a pressure in the flow passage during liquid dispense, a calculator for calculating an attenuation rate of a time-varying waveform of pressure measured by the sensor after a predetermined action of the syringe, and a determination unit making, based on an attenuation rate calculated by the calculator, a determination whether or not an abnormality has occurred in a process during liquid dispense.

A reagent and a sample are typically exemplified as the liquid herein. The present invention is applicable to the use of arbitrary types of liquids so long as the predetermined volume of such liquid has to be dispensed.

The probe may be an arbitrary mechanism that temporarily holds the predetermined volume of liquid, and transfers the liquid from one container to another. The mechanism should not be interpreted narrowly by the designation. For example, it may be designated as a zipper-shaped nozzle, which is also included in the concept of the probe.

The syringe is typically exemplified as a pressure generation source that causes a drive mechanism such as a motor to drive the piston-shaped mechanical component via a gear. Irrespective of the designation, components of any type such as the gear pump and the rotor pump are applicable so long as they can cause the pressure variations.

### Advantageous Effects of Invention

The present invention provides the automatic analyzer that can easily sense the abnormality occurred during the dispensing action with high accuracy. Advantageous effects derived from the respective embodiments will be explained in examples as described hereinafter. Brief Description of Drawings

[Fig. 1] Fig. 1 is a schematic diagram of an automatic analyzer.
[Fig. 2] Fig. 2 is a schematic diagram of a sample dispensing mechanism of the automatic analyzer.
[Fig. 3] Fig. 3 shows diagrams illustrating a liquid movement in a sample probe from a liquid aspiration action of the sample probe to a backlash discharge action (a) at normal aspiration, (b) at idle aspiration and (c) at aspiration of liquid and air.
[Fig. 4] Fig. 4 shows charts illustrating pressure variations within a dispensing passage (a) at sample aspiration and (b) at backlash discharge.
[Fig. 5] Fig. 5 shows (a) a chart illustrating a maximum value, a minimum value and a period and (b) a chart illustrating a baseline and amplitude, which are about calculation of a pressure waveform and an attenuation rate at the backlash discharge.
[Fig. 6] Fig. 6 is a chart illustrating the result of calculation of an attenuation rate to the liquid aspiration volume.
[Fig. 7] Fig. 7 is a flow diagram of the dispensing action and the pressure determination.
[Fig. 8] Fig. 8 is a chart illustrating the relationship between the attenuation rate and a ratio of an actual volume of aspiration to a set volume of aspiration.

### Description of Embodiments

An embodiment of the present invention will be described referring to the drawings. The present invention will be described with respect to specific examples, but is not limited thereto. It will be apparent that various modifications and corrections can be made by those skilled in the art without departing from the spirit and scope of the invention and its equivalents, as set forth in the following description. In all drawings for description of the present invention, the same reference numerals are used for components with identical functions. In some cases, the repetitive description of those components may be omitted.

### First Embodiment

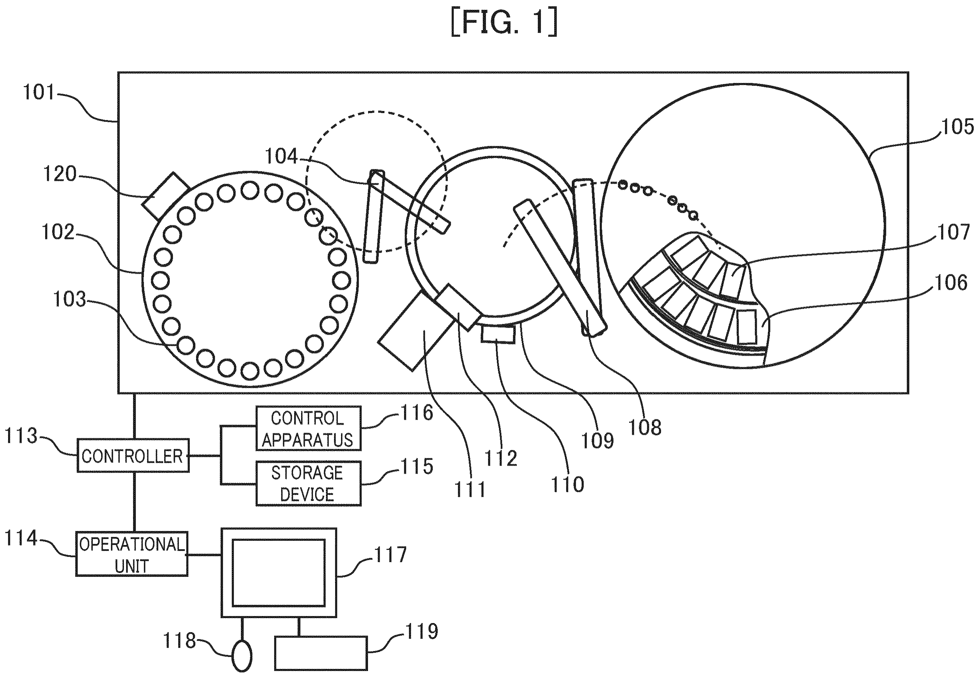

Fig. 1 is an example of a diagram of an automatic analyzer according to the present invention.

A sample disk 102 in an automatic analyzer 101 allows sample containers 103 to be circularly arranged thereon. When dispensing the sample, the disk rotates clockwise/counterclockwise to move the sample container 103 to a position accessed by a sample dispensing mechanism 104.

In some cases, for the purpose of simplifying management of samples, an identification barcode may be applied to the sample container 103. The barcode records information associated with the sample ID, and with information relating to the sample type such as blood and urine. A barcode reader 120 reads the barcode applied to the sample container 103.

The sample dispensing mechanism 104 is composed of a rotating drive mechanism, a vertical drive mechanism, and a dispensing probe. The rotating drive mechanism and the vertical drive mechanism allow the sample dispensing mechanism to move between a sample aspirating position and a sample discharging position.

A reagent storage 105 includes a reagent disk 106 and a reagent container holder 107. Generally, the reagent storage has a cold retention function for suppressing time-varying deterioration of the reagent. The reagent container holders 107 are arranged double-circularly on the reagent disk 106 to hold a plurality of reagent bottles. The reagent disk 106 includes a rotating drive mechanism which allows the respective reagent bottles to be moved to a predetermined position on a circumference through rotating operations.

The automatic analyzer according to the present invention includes a reagent dispensing mechanism 108 for biochemical analysis. The reagent dispensing mechanism 108 is composed of a rotating drive mechanism, a vertical drive mechanism, and a dispensing probe. The reagent dispensing mechanism rotatably descends to a position of the reagent bottle of specific type on the reagent disk 106 to aspirate a predetermined volume of reagent. After aspiration of the reagent, the dispensing mechanism ascends. Then the mechanism rotatably descends to a reagent discharging destination (predetermined reaction cell on a reaction disk 109), and discharges the reagent.

The following describes a biochemical analysis flow in order of processing (sample dispense, reagent dispense, reaction, and detection).

The sample dispensing mechanism 104 dispenses a predetermined volume of sample to a predetermined reaction cell on the reaction disk 109. Then the reaction disk 109 rotates to move the reaction cell to which the sample has been discharged to a position accessed by the reagent dispensing mechanism 108.

The reagent dispensing mechanism 108 dispenses a predetermined volume of reagent to the reaction cell to which the sample has been discharged. The reaction disk 109 rotates to move the reaction cell to which the sample and the reagent have been discharged to a position on which a stirring unit 110 is mounted. The sample and the reagent are stirred by the stirring unit 110. The reaction disk 109 has its temperature controlled to be suitable for facilitating the reaction between the sample and the reagent.

Upon completion of the process of reaction between the sample and the reagent on the reaction disk 109, the reaction disk 109 rotates to move the reaction cell that contains the reaction liquid after completion of the reaction to a mount position of a biochemical detection unit 111. A detector in the biochemical detection unit 111 measures a reaction signal. After measurement of the signal, the reaction liquid is discharged from the reaction cell by a reaction cell cleaning mechanism 112.

The above-described mechanism of the automatic analyzer is referred to as an analytical action unit. In addition to the analytical action unit, the automatic analyzer includes a controller 113 for controlling entire operations of the automatic analyzer, and an operational unit 114.

For example, the controller 113 is composed of a hardware substrate and a computer, to which a storage device 115 such as a hard disk is connected. The operational unit 114 is composed of a display 117 as a display unit provided with a touch panel, and an input device such as a mouse 118 and a keyboard 119. The storage device 115 stores analysis items of, for example, samples registered by a user. The controller 113 may be configured as hardware using a dedicated circuit substrate, or software to be executed by the computer.

The controller configured as the hardware may be implemented by integrating a plurality of calculators for executing processing on the wiring board, or either in the semiconductor chip or the package. The controller configured as the software may be implemented by installing a high-speed general-purpose CPU in the computer to execute the program for the desired calculation processing. It is also possible to upgrade the existing device by utilizing a recording medium that records such program. The device, the circuit, and the computer as described above are connected via a wired or wireless network for appropriate data transmission/reception.

The following describes an operation of the sample dispensing mechanism of the automatic analyzer according to the present invention. The reagent dispensing mechanism may be similarly configured to allow sensing of abnormalities which occur during the liquid dispense according to the present invention. Description of the reagent dispensing mechanism will be omitted due to the overlap of information.

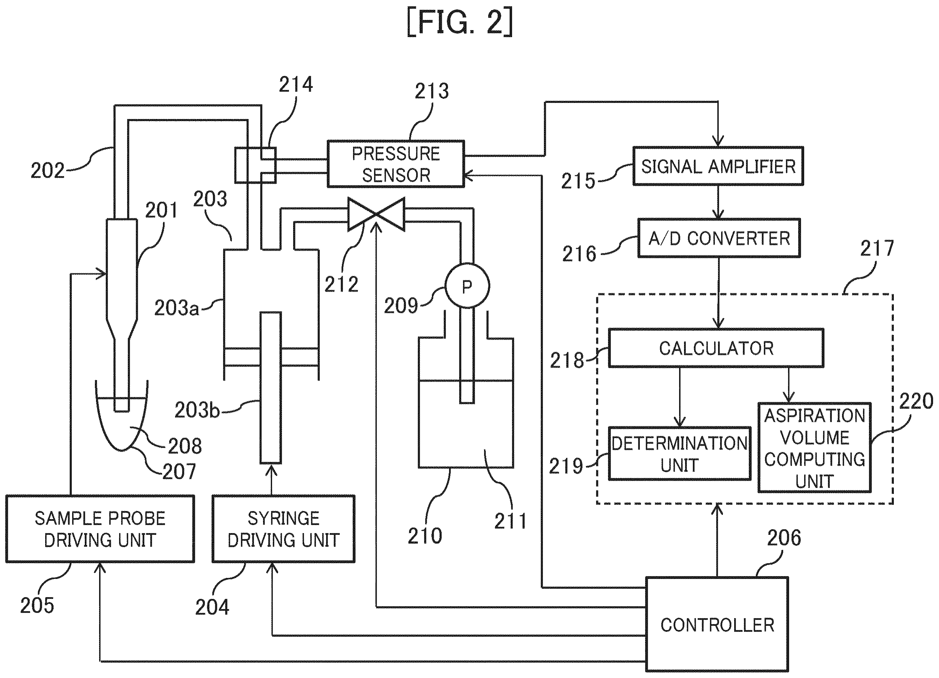

Fig. 2 is the schematic diagram of a sample dispensing mechanism. A sample probe 201 is connected to a sample syringe 203 via a flow passage 202. Those elements are filled with liquid.

The sample syringe 203 is composed of a cylinder 203a and a plunger 203b. A syringe driving unit 204 is connected to the plunger 203b. The syringe driving unit 204 allows the plunger 203b to be vertically driven with respect to the cylinder 203a for aspiration and discharging of the sample.

The sample probe 201 is connected to a motor as a sample probe driving unit 205, by which the sample probe can be moved in the vertical and rotational directions to reach a predetermined position. The syringe driving unit 204 and the sample probe driving unit 205 are controlled by a sample probe controller 206 (simply designated as "controller" in Fig. 2).

When aspirating a sample 208 in a container 207, a predetermined volume of air (referred to as segment air) is aspirated into the sample probe prior to the aspiration to prevent mixture of the sample 208 with the liquid filled in the sample probe 201.

The sample probe driving unit 205 descends the sample probe 201 until it reaches the sample 208 so that the aspiration is further performed.

The descent amount of the sample probe at this time is determined by monitoring the capacitance change as a result that the sample probe 201 has reached the liquid surface of the sample 208, and controlling the sample probe driving unit 205 by the sample probe controller 206.

At the end of the sample aspiration action, the sample syringe 203 performs a backlash discharging action for adjusting the sample discharge volume in the subsequent discharge. Thereafter, the sample probe 201 moves to a sample discharge position at which the sample syringe 203 performs the discharging action.

After the discharging action, a water supply pump 209 pumps out cleaning water 211 in a water supply tank 210 under high pressure to allow cleaning of the sample probe 201. An electromagnetic valve 212 serves to open/close the flow passage to the water supply tank. The electromagnetic valve 212 is controlled by the sample probe controller 206.

A pressure sensor 213 for measuring the pressure in the flow passage 202 is connected to a flow passage system including the sample probe 201, the flow passage 202, and the sample syringe 203 via a branching block 214. Preferably, the pressure sensor 213 is provided at a side of the sample probe 201 as close as possible for measuring the pressure variations of the sample probe 201 with high sensitivity.

An output value of the pressure sensor 213 is amplified by a signal amplifier 215, and converted into a digital signal by an A/D converter 216. The digitally converted signal is transmitted to a calculator 218 to calculate a determination criterion, based on which it is determine whether the aspiration has been normally done by the method to be described below (whether the idle aspiration has occurred). A determination unit 219 determines whether the sample has been normally aspirated based on the comparison between the threshold value and the determination criterion derived from the calculator 218.

Each action timing of the respective mechanisms within a specified time cycle is defined for the above-described dispensing action. This cycle is repeatedly performed for continuous dispensing actions.

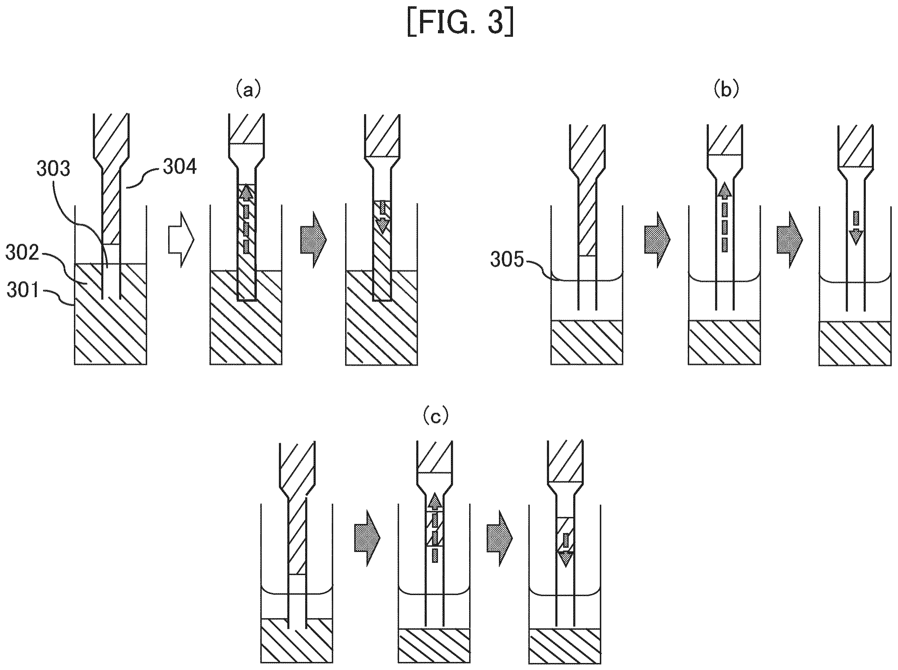

Fig. 3 illustrates that the sample dispensing mechanism aspirates a sample 302 in a sample container 301 in the state of (a) normal aspiration of the sample, (b) idle aspiration, and (c) aspiration of liquid and air.

In the automatic analyzer as described above, a sample dispensing probe 304 senses the sample liquid surface based on the capacitance change so that the sample dispensing probe 304 is stopped below the sample liquid surface.

After the sample is aspirated in the presence of segment air 303 at the leading end of the sample dispensing probe, the backlash discharge is performed. While the sample dispensing probe 304 is descending for aspiration, if the liquid surface level is erroneously recognized owing to air bubbles 305, there may be the case where only air is fully aspirated (idle aspiration), or liquid and air are aspirated. This may reduce the discharge volume to be smaller than the expected discharge volume upon discharge of the sample, and give an influence on the analytical result.

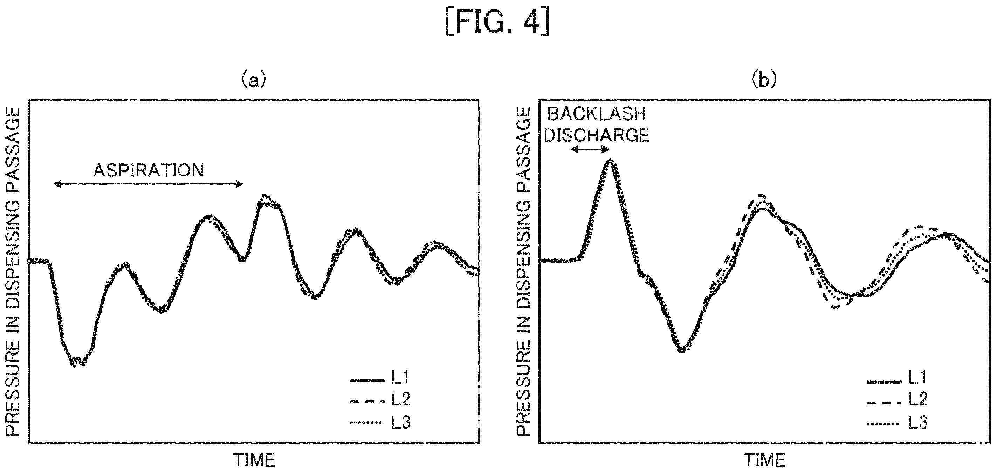

Fig. 4 illustrates pressure waveforms obtained in (a) the sample aspiration and (b) the backlash discharge in a sample dispensing unit provided with a pressure sensor. In each chart, the x-axis denotes the time, and the y-axis denotes the pressure value in the dispensing flow passage output by the pressure sensor. The pressure waveform varies with the sample syringe actions. The sample, detergent, cleaning water and the like, but not limited thereto, are expected to be exemplified as the liquid to be aspirated. The reagent, detergent and cleaning water, but not limited thereto, are expected to be exemplified as the liquid in the reagent dispensing mechanism.

A reference code L1 denotes a pressure waveform formed in the normal sample aspiration. A reference code L2 denotes a pressure waveform formed in the idle aspiration. A reference code L3 denotes a pressure waveform formed in the aspiration of liquid and air.

Referring to those charts, compared with the pressure in the backlash discharge, the difference in the pressure waveforms formed in the aspiration between the normal aspiration (L1) and the abnormal aspiration (L2, L3) is unlikely to be noticeable. If the dispense volume is different, the driving amount of the sample syringe 203 varies. Accordingly, the aspiration time depends on the dispense volume.

Upon analysis of the pressure waveform, the use of the pressure waveform in the section that depends on the dispense volume requires preparation of the determination parameter in accordance with the dispense volume. Accordingly, it is anticipated to make the calculation processing complicated.

Meanwhile, the difference in the pressure waveforms in the backlash discharging action is relatively more noticeable compared with the pressure waveforms in the aspiration. The amount and timing of the action are constant irrespective of the dispense volume. Compared with the analysis of the pressure waveform in the aspiration, the determination parameters can be easily prepared for the pressure analysis in the backlash discharge.

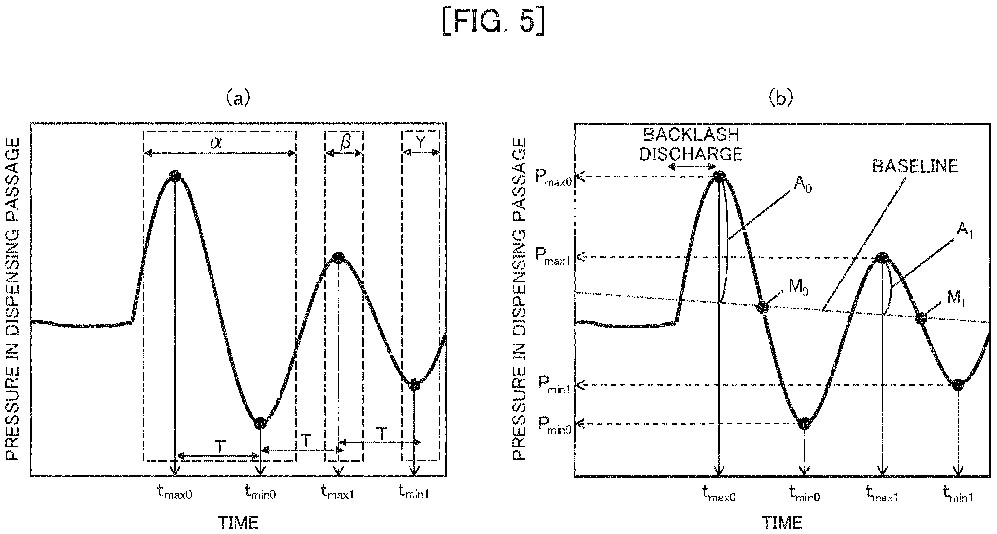

Fig. 5 shows an analytical method of an attenuation rate using the waveform formed in the backlash discharge ((a) acquisition of a maximum value, a minimum value, and information of a period, and (b) acquisition of a baseline and information of an amplitude). The largest value and the smallest value in the section near the backlash discharging action (time width α) are defined as an initial maximum value Pₘₐₓ₀ and an initial minimum value Pₘᵢₙ₀. respectively. Each time for taking the maximum value Pₘₐₓ₀ and the minimum value Pₘᵢₙ₀ is defined as a tₘₐₓ₀ and tₘᵢₙ₀, respectively. The time difference between the tₘₐₓ₀ and the tₘᵢₙ₀ is defined as a period T. The largest value in the section with its width β taking the time having the period T elapsing from the tₘᵢₙ₀ as a median is defined as a first maximum value Pₘₐₓ₁, and the corresponding time is defined as tₘₐₓ₁.

The smallest value in the section with its width γ taking the time having the period T elapsing from the tₘₐₓ₁ as a median is defined as a first minimum value Pₘᵢₙ₁, and the corresponding time is defined as tₘᵢₙ₁. More numbers of maximum values and minimum values may be acquired by executing similar procedures repeatedly. The method for acquiring the maximum values and the minimum values is not limited to the one as described above. It is possible to set a plurality of time sections to define the largest value as the maximum value, and the smallest value as the minimum value for each of the time sections.

The baseline is obtained for acquiring the waveform amplitude. The y-axis and the x-axis with respect to the pressure waveform in the charts are defined as the pressure and the time, respectively. Coordinates are expressed by (pressure, time). A median M₀ ((tₘₐₓ + tₘᵢₙ₀)/2, (Pₘₐₓ₀ + Pₘᵢₙ₀)/2) on the line formed by connecting the point of the initial maximum value and the point of the initial minimum value, and a median M₁ ((tₘₐₓ₁ + tₘᵢₙ₁)/2, (Pₘₐₓ₁ + Pₘᵢₙ₁)/2) on the line formed by connecting the point of the first maximum value and the point of the first minimum value are obtained. The straight line formed by connecting the medians M₀ and M₁ is defined as the baseline. The method for forming the baseline is not limited to the one as described above. It is possible to form the baseline as the straight line parallel to the time axis, while taking an arbitrary pressure value.

The amplitude is obtained. The distance between the initial maximum value Pₘₐₓ₀ and the baseline at the time tₘₐₓ₀ taking the initial maximum value is defined as an initial amplitude A₀. The distance between the first maximum value Pₘₐₓ₁ and the baseline at the time tₘₐₓ₁ taking the first maximum value is then defined as a first amplitude A₁. The method for calculating the amplitude is not limited to the one as described above. It is possible to define the difference in the pressure value between the initial maximum value and the initial minimum value as the initial amplitude, and to define the difference in the pressure value between the first maximum value and the first minimum value as the first amplitude. It is also possible to calculate the second amplitude A₂ and subsequent amplitudes.

Next, the attenuation rate is calculated. A ratio between the initial amplitude A₀ and the first amplitude A₁ is obtained as the attenuation rate D = A₁/A₀. The attenuation rate may be obtained using the second amplitude A₂ and subsequent amplitudes. It is possible to calculate two or more attenuation rates.

It is possible to provide the function for determining occurrence of failure in the apparatus when abnormality is numerically detected in the process of calculating the attenuation rate. For example, if there is no pressure variation owing to the failure in the syringe or the pressure sensor to result in A₀ = A₁ = 0, the attenuation rate cannot be calculated. In the above situation, it is possible to implement the function of interrupting the attenuation rate calculation, and notifying the user of the failure in the apparatus.

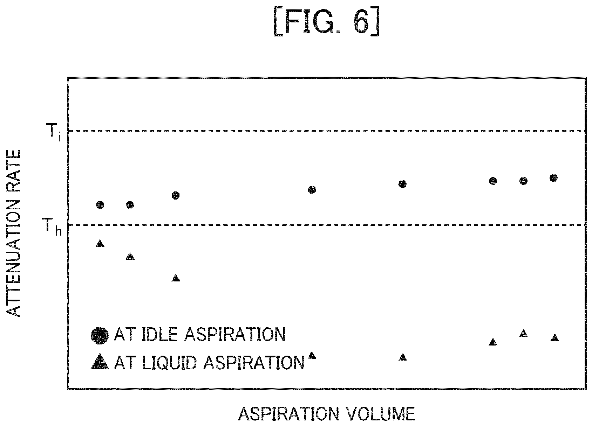

Fig. 6 is a chart illustrating comparison between the attenuation rate at the normal aspiration and the attenuation rate at the idle aspiration. In the respective dispense volume conditions, the attenuation rate can be polarized into the one in the normal aspiration and the one in the liquid aspiration. The attenuation rate calculated by the calculator 218 is compared with threshold values Tₕ, Tᵢ which are preliminarily stored in the determination unit 219. If the attenuation rate is smaller than the threshold value Tₕ, it is determined that the aspiration has been normally done. If the attenuation rate is within the range between the threshold values Tₕ and Tᵢ inclusive, it is determined that the idle aspiration has occurred. If the attenuation rate is larger than the threshold value Tᵢ, it is determined that the abnormality has occurred in the apparatus.

The idle aspiration may be determined using two or more attenuation rates. Not only the attenuation rate but also the period T to be combined can be used as the determination parameter. The threshold value Tₕ may be made variable in accordance with the dispense volume and the sample liquidity.

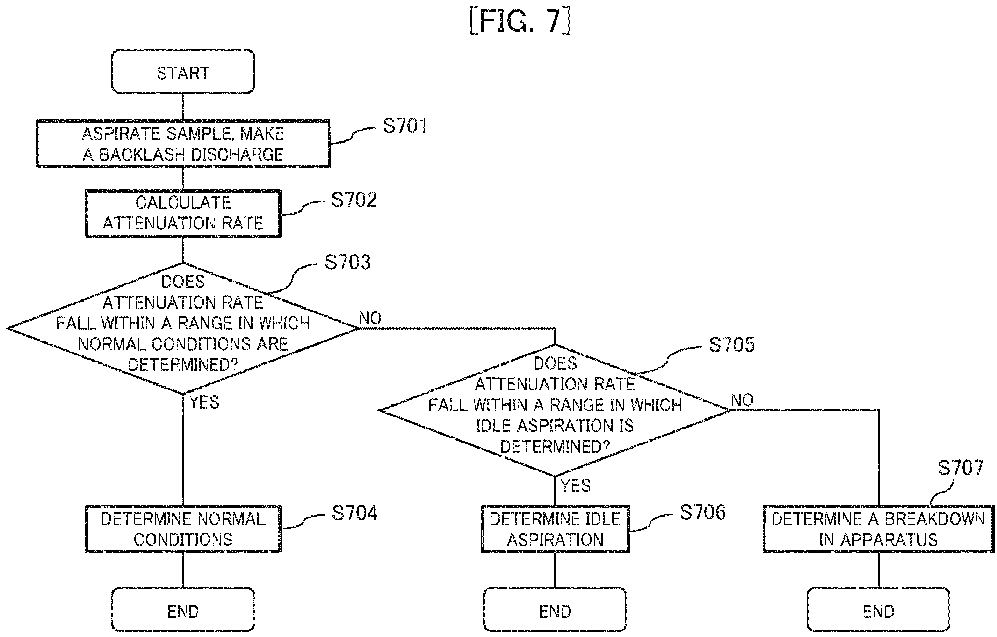

Fig. 7 is a processing flow of sensing the dispensing abnormality during the sample dispensing action. The sample dispensing mechanism performs the backlash action subsequent to the sample aspirating action (S701). The determination unit 219 calculates the attenuation rate based on the pressure value in the flow passage during the backlash discharging action (S702). The attenuation rate is compared with the threshold value stored in the determination unit 219 to determine whether the normal aspiration has been done (S703).

If the attenuation rate falls within the normal range, the subject sample dispense is determined as the normal aspiration (S704).

If the attenuation rate deviates from the normal determination range, the attenuation rate is compared with the threshold value stored in the determination unit 219 to determine whether the subject aspiration is the idle aspiration (S705).

If the attenuation rate falls within the determination range of the idle aspiration, the subject sample dispense is determined as the idle aspiration (S706). If the attenuation rate deviates from the determination range of the idle aspiration, the hardware abnormality is determined to have occurred in the sample dispensing process (S707).

Upon the abnormality determination, it is possible to divide the abnormality aspiration level into a plurality of stages by setting the threshold value for determining with respect to the full idle aspiration, and the threshold value for determining with respect to aspiration of both air and the sample. The determination unit 219 may be configured to estimate the cause based on the level of the estimated abnormality.

For example, it is estimated that the determination with respect to the full air aspiration is attributable to the abnormality in the dispensing system such as failure in the syringe rather than bubbles on the sample surface. The determination unit 219 may be configured to make a determination based on the value calculated by the calculator 218, for example, the period T to be combined as the determination parameter rather than the use only of the attenuation rate.

As described in the first embodiment, the present invention is capable of providing the automatic analyzer and the automatic analysis method, which allow easy sensing of the liquid dispensing abnormality with high accuracy. The present invention is also capable of providing the automatic analyzer and the automatic analysis method for estimating the cause of the abnormality based on the level of the abnormality in the process of abnormality determination.

### Second Embodiment

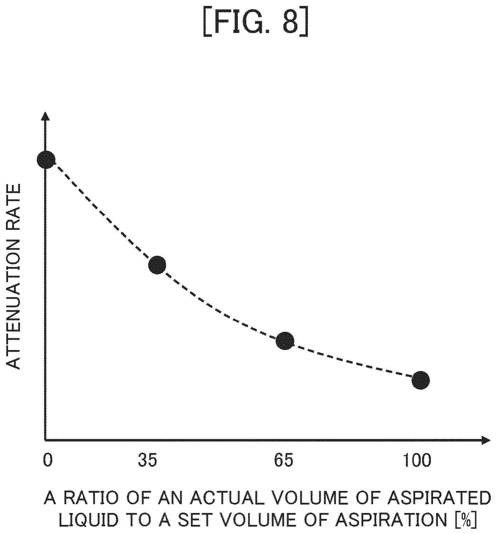

Fig. 8 illustrates a relationship between the attenuation rate and a ratio of an actual volume of aspiration to a set volume of aspiration when aspirating the set volume of liquid. The attenuation rate in the case of aspiration of air and liquid deviates from the attenuation rate obtained when the set volume of liquid can be aspirated. The degree of such deviation is increased by the amount corresponding to the aspirated volume of air.

Acquisition of a plurality of points each corresponding to the relationship between the attenuation rate and the ratio of the actual volume of aspiration to the set volume of aspiration provides a trendline for estimating the actual volume of aspiration. The trendline for estimating the actual volume of aspiration is preliminarily stored in an aspiration volume computing unit 220 to allow calculation of volume of the aspirated liquid during the aspiration action for determination with respect to the idle aspiration.

### List of Reference Signs

101: automatic analyzer
102: sample disk
103: sample container
104: sample dispensing mechanism
105: reagent storage
106: reagent disk
107: reagent container holder
108: reagent dispensing mechanism
109: reaction disk
110: stirring unit
111: biochemical detection unit
112: reaction cell cleaning mechanism
113: controller
114: operational unit
115: storage device
116: control apparatus
117: display
118: mouse
119: keyboard
120: barcode reader
201: sample probe
202: flow passage
203: sample syringe
203a: cylinder
203b: plunger
204: syringe driving unit
205: sample probe driving unit
206: sample probe controller
207: container
208: sample
209: water supply pump
210: water supply tank
211: cleaning water
212: electromagnetic valve
213: pressure sensor
214: branching block
215: signal amplifier
216: A/D converter
217: sample probe control apparatus
218: calculator
219: determination unit
220: aspiration volume computing unit
301: sample container
302: sample
303: segment air
304: sample dispensing probe
305: air bubble

## Claims

1. An automatic analyzer, comprising:
a probe for performing a dispensing action including a process of aspirating and/or discharging liquid;
a syringe for generating pressure variations for allowing the probe to dispense liquid;
a flow passage connecting the probe and the syringe;
a sensor for measuring a pressure in the flow passage during liquid dispense;
a calculator for calculating an attenuation rate of a time-varying waveform of pressure measured by the sensor after a predetermined action of the syringe; and
a determination unit making, based on an attenuation rate calculated by the calculator, a determination whether or not an abnormality has occurred in a process during liquid dispense.

2. The automatic analyzer according to claim 1, wherein
the predetermined action is a backlash discharge for eliminating mechanical rattling of the syringe.

3. The automatic analyzer according to claim 1, wherein
the calculator calculates a baseline of a pressure waveform from a maximum value and a minimum value in a predetermined section of the time-varying waveform of pressure, and the calculator calculates the attenuation rate based on changes in ratio of either a difference between the baseline and the maximum value or a difference between the baseline and the minimum value.

4. The automatic analyzer according to claim 1, wherein
the calculator further calculates an oscillation period of the time-varying waveform of pressure, and the determination unit uses the oscillation period to make the determination.

5. The automatic analyzer according to claim 1 or claim 4, wherein
the determination unit makes the determination by performing a comparison between a threshold value previously determined and the attenuation rate and/or the oscillation period.

6. The automatic analyzer according to claim 5, wherein
the threshold value is a threshold value determined based on the attenuation rate and/or the oscillation period when air is also aspirated during liquid aspiration.

7. The automatic analyzer according to claim 6, wherein
the threshold value includes a plurality of threshold values in accordance with dispense volumes of the liquid.

8. The automatic analyzer according to claim 6, wherein
the threshold value includes a plurality of threshold values in accordance with liquidity of a liquid aspirated by the probe.

9. A method for determining an abnormality in an automatic analyzer including:
a probe for performing a dispensing action including a process of aspirating and/or discharging liquid;
a syringe for generating pressure variations for allowing the probe to dispense liquid;
a flow passage connecting the probe and the syringe; and
a sensor for measuring a pressure in the flow passage during liquid dispense,
the method at least comprising:
a waveform acquiring step of acquiring a time-varying waveform of pressure by the sensor after a predetermined action of the syringe;
an attenuation rate calculation step of calculating a pressure attenuation rate based on the time-varying waveform of pressure acquired in the waveform acquiring step; and
an abnormality determination step of determining based on an attenuation rate calculated in the attenuation rate calculation step whether or not an abnormality has occurred in a process during liquid dispense.
